# EUROPÄISCHE PATENTANMELDUNG

(11) **EP 3 882 067 A1**
(43) Veröffentlichungstag der Anmeldung: **22.09.2021**
(21) Anmeldenummer: 21157587.3
(22) Anmeldetag: 17.02.2021
(51) Int. Cl.: B60L 9/00, H02J 7/00, H02J 1/08

(54) **FAHRZEUG, INSBESONDERE SCHIENENFAHRZEUG**

(30) Priorität: 16.03.2020 DE 102020203323
(71) Anmelder: Siemens Mobility GmbH, 81739 München (DE)
(72) Erfinder: Eckert, Peter, 91058 Erlangen (DE); Glinka, Martin, 91080 Uttenreuth (DE)

(57) **Zusammenfassung**

Die Erfindung bezieht sich auf ein Fahrzeug, insbesondere Schienenfahrzeug (10), mit einem Gleichspannungszwischenkreis (14) und zumindest einem mit dem Gleichspannungszwischenkreis (14) verbundenen Sekundärkreis (17), der ein niedrigeres Spannungsniveau als der Gleichspannungszwischenkreis (14) aufweist. Erfindungsgemäß ist vorgesehen, dass an dem Gleichspannungszwischenkreis (14) zwei in Reihe geschaltete Batterieeinheiten (31, 32) angeschlossen sind, der elektrisch zwischen den Batterieeinheiten (31, 32) liegende Mittenanschluss (M) unmittelbar oder mittelbar über eine Impedanz (Z) auf Massepotential (MP) liegt, und der Sekundärkreis (17) mit dem Mittenanschluss (M) in Verbindung steht und mit der Batteriespannung (U1, U2) einer der beiden Batterieeinheiten (31, 32) beaufschlagt wird.

## Beschreibung

Die Erfindung bezieht sich auf Fahrzeuge, insbesondere Schienenfahrzeuge, mit einem Gleichspannungszwischenkreis und zumindest einem mit dem Gleichspannungszwischenkreis verbundenen Sekundärkreis, der ein niedrigeres Spannungsniveau als der Gleichspannungszwischenkreis aufweist.

Im Bereich der Schienenfahrzeugtechnik wird der Gleichspannungszwischenkreis mit Blick auf den Energiebedarf der Antriebsmotoren üblicherweise in einem Spannungsbereich zwischen 1400 und 2000 Volt betrieben. Der Sekundärkreis steht mit dem Gleichspannungszwischenkreis üblicherweise über einen DC/DC-Steller in Verbindung, der ausgangsseitig eine niedrigere Sekundärkreisspannung erzeugt, üblicherweise in einem Bereich zwischen 700 Volt und 1000 Volt.

Der Erfindung liegt die Aufgabe zugrunde, ein Fahrzeug, insbesondere Schienenfahrzeug, hinsichtlich des Anschlusses des Sekundärkreises an den Gleichspannungszwischenkreis zu optimieren.

Diese Aufgabe wird erfindungsgemäß durch ein Fahrzeug mit den Merkmalen gemäß Patentanspruch 1 gelöst. Vorteilhafte Ausgestaltungen des erfindungsgemäßen Fahrzeugs sind in Unteransprüchen angegeben.

Danach ist erfindungsgemäß vorgesehen, dass an den Gleichspannungszwischenkreis zwei in Reihe geschaltete Batterieeinheiten angeschlossen sind, der elektrisch zwischen den Batterieeinheiten liegende Mittenanschluss unmittelbar oder mittelbar über eine Impedanz auf Massepotential liegt, und der Sekundärkreis mit dem Mittenanschluss in Verbindung steht und mit der Batteriespannung einer der beiden Batterieeinheiten beaufschlagt wird.

Ein wesentlicher Vorteil des erfindungsgemäßen Fahrzeugs ist darin zu sehen, dass durch die in Reihe geschalteten Batterieeinheiten eine Spannungsaufteilung bzw. (bei gleichen oder zumindest ähnlichen Klemmenspannungen der Batteriezellen) eine Spannungshalbierung erreicht wird, die unmittelbar für den Betrieb des Sekundärkreises herangezogen werden kann. Durch die in Reihe geschalteten Batterieeinheiten kann somit beispielsweise auf einen DC/DC-Wandler zur Umwandlung der Gleichspannung des Gleichspannungszwischenkreises auf das niedrigere Niveau der Sekundärspannung im Sekundärkreis verzichtet werden.

Ein weiterer wesentlicher Vorteil des erfindungsgemäßen Fahrzeugs ist darin zu sehen, dass durch die Spannungsaufteilung bzw. (bei gleichen oder zumindest ähnlichen Klemmenspannungen der Batteriezellen) die Spannungshalbierung in Kombination mit einer Erdung bzw. einem auf Masselegen des Mittenanschlusses - im Falle von Gleichspannungszwischenkreisen mit 1400 V bis 2000 V - Batterieeinheiten eingesetzt werden können, die eine elektrische Isolationsfähigkeit von lediglich 700 bis 1000 V aufweisen und demgemäß kostengünstiger erhältlich sind als Batterieeinheiten mit einer elektrischen Isolationsfähigkeit von doppelt so viel Spannung.

Der Gleichspannungszwischenkreis dient vorzugsweise zum Speisen zumindest eines Antriebsmotors des Fahrzeugs; demgemäß wird es als vorteilhaft angesehen, wenn an den Gleichspannungszwischenkreis zumindest ein Wechselrichter angeschlossen ist, der mit einem oder mehreren Antriebsmotoren verbunden ist und diese speisen kann.

An den Sekundärkreis ist vorzugsweise ein Umrichter, insbesondere Hilfsbetriebeumrichter angeschlossen, mit dem ein internes Bordnetz des Fahrzeugs gespeist wird.

Vorteilhaft ist es, wenn eine Symmetriereinrichtung vorhanden ist, die eine etwaige Abweichung zwischen den Spannungen der zwei Batterieeinheiten unterhalb einer vorgegebenen Grenze hält.

Bei einer bevorzugten Ausgestaltung ist vorgesehen, dass die Symmetriereinrichtung mit zumindest einem Anschluss mit der einen Batterieeinheit und mit zumindest einem Anschluss mit der anderen Batterieeinheit verbunden ist und zwischen den Batterieeinheiten zumindest einen unidirektionalen Energiefluss ermöglicht.

Alternativ oder zusätzlich kann in vorteilhafter Weise vorgesehen sein, dass die Symmetriereinrichtung mit zumindest einem Anschluss mit der einen Batterieeinheit und mit zumindest einem Anschluss mit der anderen Batterieeinheit verbunden ist und einen Energiefluss bidirektional zwischen den Batterieeinheiten, also von der einen Batterieeinheit in die andere oder umgekehrt, ermöglicht.

Alternativ oder zusätzlich kann in vorteilhafter Weise vorgesehen sein, dass die Symmetriereinrichtung mit zumindest einem Anschluss mit dem Gleichspannungszwischenkreis und mit zumindest einem Anschluss mit einer der Batterieeinheiten verbunden ist und einen Energiefluss zwischen dem Gleichspannungszwischenkreis und der Batterieeinheit - uni- oder bidirektional - ermöglicht.

Bei einer bevorzugten Ausgestaltung umfasst die Symmetriereinrichtung einen bidirektionalen Stromsteller, der einen Energiefluss wahlweise von der einen Batterieeinheit in die andere oder umgekehrt ermöglicht. Wird der Stromsteller, wie es vorteilhaft ist, spannungsmäßig zwischen die Batterieeinheiten geschaltet, so werden seine Schaltkomponenten vorzugsweise jeweils nur mit der halben Gleichspannung des Gleichspannungszwischenkreises bzw. nur mit der Gleichspannung des Sekundärkreises beaufschlagt; dies ermöglicht in vorteilhafter Weise den Einsatz eines besonders leichten und kostengünstigen Stromstellers.

Alternativ oder zusätzlich kann die Symmetriereinrichtung einen DC/DC-Wandler, insbesondere DC/DC-Steller, umfassen, der mit zumindest einem Anschluss mit der einen Batterieeinheit und mit zumindest einem Anschluss mit der anderen Batterieeinheit verbunden ist und einen Energiefluss wahlweise von der einen Batterieeinheit in die andere oder umgekehrt ermöglicht. Wird der DC/DC-Wandler zwischen die Batterieeinheiten geschaltet, so wird er nur mit der halben Gleichspannung des Gleichspannungszwischenkreises bzw. nur mit der Gleichspannung des Sekundärkreises beaufschlagt und muss somit nur halb so spannungsfest ausgeführt werden wie im Falle eines Anschlusses an den Gleichspannungszwischenkreis. Dies ermöglicht in vorteilhafter Weise den Einsatz eines besonders leichten und kostengünstigen DC/DC-Wandlers.

Alternativ oder zusätzlich kann die Symmetriereinrichtung einen DC/DC-Wandler, insbesondere DC/DC-Steller umfassen, der mit einer Anschlussseite mit der Gleichspannung des Gleichspannungszwischenkreises beaufschlagt wird, mit seiner anderen Anschlussseite mit einer der Batterieeinheiten verbunden ist und einen Energietransfer zwischen dem Gleichspannungszwischenkreis und der Batterieeinheit ermöglicht.

Alternativ oder zusätzlich kann die Symmetriereinrichtung einen invertierenden Wandler umfassen, der mit zumindest einem Anschluss mit der einen Batterieeinheit und mit zumindest einem Anschluss mit der anderen Batterieeinheit verbunden ist und einen Energiefluss von einer der Batterieeinheiten in die andere ermöglicht. Wird der invertierende Wandler, wie hier vorgeschlagen, zwischen die Batterieeinheiten geschaltet, so wird er nur mit der halben Gleichspannung des Gleichspannungszwischenkreises bzw. nur mit der Gleichspannung des Sekundärkreises beaufschlagt; dies ermöglicht in vorteilhafter Weise den Einsatz eines besonders leichten und kostengünstigen invertierende Wandlers.

Alternativ oder zusätzlich kann die Symmetriereinrichtung eine Schalteinrichtung umfassen, die den Sekundärkreis wahlweise mit der einen Batterieeinheit oder der anderen Batterieeinheit verbindet oder zumindest verbinden kann.

Alternativ oder zusätzlich kann die Symmetriereinrichtung eine Energiequelle umfassen oder mit einer Energiequelle des Sekundärkreises in Verbindung stehen, die die Symmetriereinrichtung mit zumindest einer der Batterieeinheiten verbinden kann, um diese aufzuladen.

Alternativ oder zusätzlich kann die Symmetriereinrichtung eine elektrische Last umfassen oder mit einer elektrischen Last des Sekundärkreises in Verbindung stehen, die die Symmetriereinrichtung mit zumindest einer der Batterieeinheiten verbinden kann, um diese zu entladen.

Die Batterieeinheiten oder mindestens eine der Batterieeinheiten kann in Reihe geschaltete Batteriezellen umfassen.

Die Batterieeinheiten oder mindestens eine der Batterieeinheiten kann zwei oder mehr parallel geschaltete Reihenschaltungen aus in Reihe geschalteten Batteriezellen umfassen.

Die Batterieeinheiten sind vorzugsweise baugleich sind oder weisen vorzugsweise zumindest die gleiche nominale Ladespannung auf. Auch ist vorteilhaft, wenn sie dieselbe nominale Ladekapazität aufweisen.

Die Batterieeinheiten weisen vorzugsweise eine nominale Ladespannung in einem Bereich zwischen 700 und 1000 V auf.

Die Zwischenkreisspannung des Gleichspannungszwischenkreises liegt vorzugsweise in einem Bereich zwischen 1400 V und 2000 V.

Bei dem Fahrzeug handelt es sich vorzugsweise um ein elektrisch angetriebenes Fahrzeug oder ein zumindest auch elektrisch angetriebenes Hybridfahrzeug, beispielsweise mit Brennstoffzellenenergieversorgung.

Die Erfindung wird nachfolgend anhand von Ausführungsbeispielen näher erläutert; dabei zeigen beispielhaft:
- Figur 1: in einer schematischen Darstellung Bestandteile eines ersten Ausführungsbeispiels für ein erfindungsgemäßes Schienenfahrzeug, das mit einer Symmetriereinrichtung ausgestattet ist,
- Figur 2: ein Ausführungsbeispiel für eine Symmetriereinrichtung, die einen DC/DC-Wandler aufweist,
- Figur 3: ein weiteres Ausführungsbeispiel für eine Symmetriereinrichtung, die einen DC/DC-Wandler aufweist,
- Figur 4: ein Ausführungsbeispiel für eine Symmetriereinrichtung, die einen invertierenden Wandler aufweist,
- Figur 5: ein Ausführungsbeispiel für eine Symmetriereinrichtung, die einen Stromsteller aufweist, und
- Figur 6: in einer schematischen Darstellung Bestandteile eines zweiten Ausführungsbeispiels für ein erfindungsgemäßes Schienenfahrzeug, bei dem eine Symmetriereinrichtung eine Schalteinrichtung umfasst.

In den Figuren werden der Übersicht halber für identische oder vergleichbare Komponenten stets dieselben Bezugszeichen verwendet.

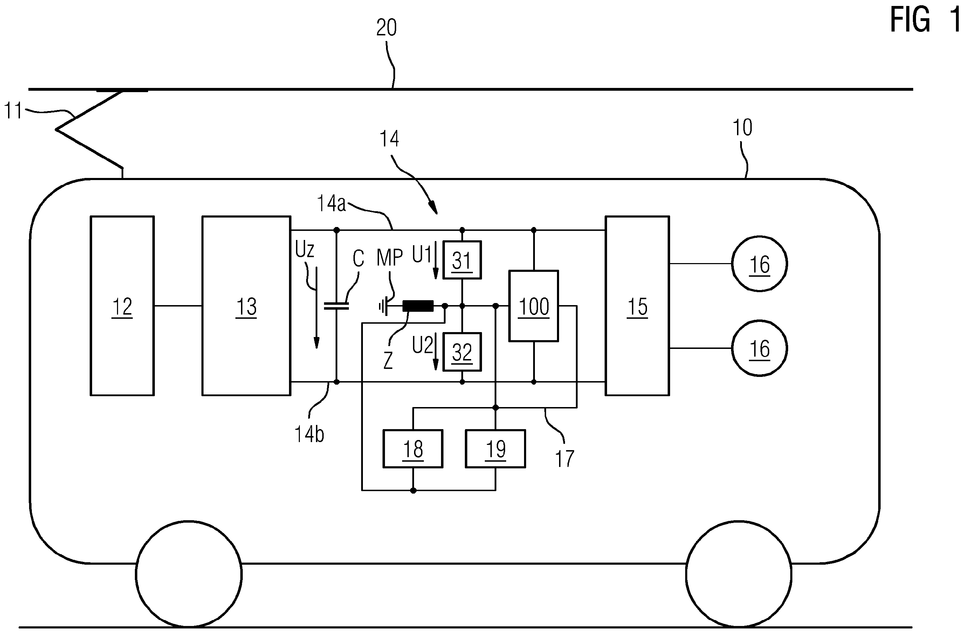

Die Figur 1 zeigt ein Ausführungsbeispiel für ein erfindungsgemäßes Schienenfahrzeug 10, das mit einem Stromabnehmer 11 an ein externes streckenseitiges Energieversorgungssystem 20 angeschlossen ist. Mit dem Stromabnehmer 11 steht ein Transformator 12 in Verbindung, dem ein Gleichrichter 13 nachgeschaltet ist. Ausgangsseitig steht mit dem Gleichrichter 13 ein Gleichspannungszwischenkreis 14 des Schienenfahrzeugs 10 in Verbindung, an den wiederum ein Wechselrichter 15 angeschlossen ist. Ausgangsseitig steht der Wechselrichter 15 mit einem oder mehreren Antriebsmotoren 16 in Verbindung.

An den Gleichspannungszwischenkreis 14, dessen Spannung Uz mittels eines Kondensators C geglättet wird, sind zwei in Reihe geschaltete Batterieeinheiten, nämlich eine erste, in der Figur 1 obere Batterieeinheit 31, und eine zweite, in der Figur 1 untere Batterieeinheit 32, angeschlossen. Elektrisch zwischen den beiden Batterieeinheiten 31 und 32 liegt ein Mittenanschluss M, der mittelbar, wie in der Figur 1 gezeigt, über eine Impedanz Z, bei der es vorzugsweise um eine Induktivität handelt, oder alternativ unmittelbar mit Massepotential MP verbunden ist.

Die Batterieeinheiten 31 und 32 weisen vorzugsweise eine nominale Ladespannung zwischen 700 und 1000 V auf. Die Zwischenkreisspannung liegt demgemäß vorzugsweise zwischen 1400 V und 2000 V.

An den Mittenanschluss M und an die Anschlüsse 14a und 14b des Gleichspannungszwischenkreises 14 ist eine Symmetriereinrichtung 100 angeschlossen, die die Aufgabe hat, eine etwaige Abweichung zwischen der an der ersten Batterieeinheit 31 anliegenden Batteriespannung U1 und der an der zweiten Batterieeinheit 32 anliegenden Batteriespannung U2 möglichst klein zu halten.

Bei dem Ausführungsbeispiel gemäß Figur 1 ist zwischen dem Mittenanschluss M und dem in der Figur 1 unteren Anschluss 14b des Gleichspannungszwischenkreises 14 ein Sekundärkreis 17 angeschlossen, der somit elektrisch parallel zu der zweiten Batterieeinheit 32 liegt und mit der Batteriespannung U2 der zweiten Batterieeinheit 32 beaufschlagt ist. Alternativ kann der Sekundärkreis 17 elektrisch parallel zu der ersten Batterieeinheit 31 liegen und mit der Batteriespannung U1 der ersten Batterieeinheit 31 beaufschlagt sein; die nachfolgenden Erläuterungen würden dann entsprechend gelten.

An den Sekundärkreis 17 können ein oder mehr elektrische Verbraucher 18 angeschlossen sein, z. B. unter anderem ein Umrichter, insbesondere Hilfsbetriebeumrichter, mit dem ein internes Bordnetz (z. B. dreiphasiges Wechselspannungsnetz mit 220 V pro Phase) des Fahrzeugs gespeist wird. Auch können ein oder mehr Energiequellen 19 (vorzugsweise Brennstoffzellen) an den Sekundärkreis 17 angeschlossen sein.

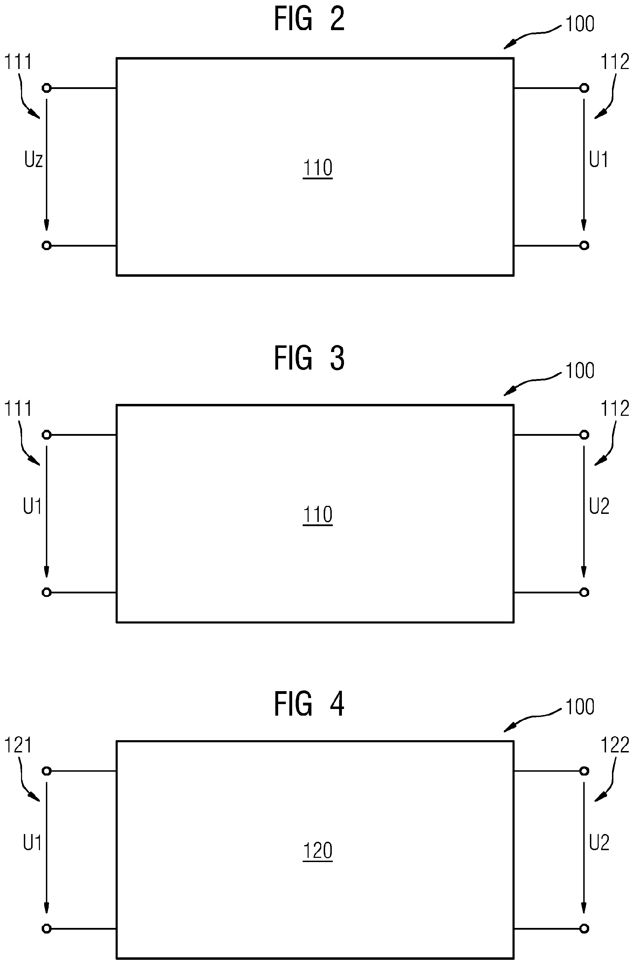

Kommt es im Betrieb des Schienenfahrzeugs 10 zu einem Energieverbrauch im Sekundärkreis 17 und somit zu einem Entladen der zweiten Batterieeinheit 32, so besteht die Funktion der Symmetriereinrichtung 100 darin zu vermeiden, dass die Spannungsabweichung zwischen den beiden Batteriespannungen U1 und U2 eine vorgegebene Grenze überschreitet. Ausführungsbeispiele für geeignete Symmetriereinrichtungen 100 für das Schienenfahrzeug 10 gemäß Figur 1 werden nachfolgend im Zusammenhang mit den Figuren 2 bis 6 näher erläutert.

Die Figur 2 zeigt ein Ausführungsbeispiel für eine Symmetriereinrichtung 100, die einen DC/DC-Wandler 110 umfasst. Die Eingangsseite 111 des DC/DC-Wandlers 110 ist an den Gleichspannungszwischenkreis 14 angeschlossen und wird somit mit der Zwischenkreisspannung Uz beaufschlagt. Die Ausgangsseite 112 des DC/DC-Wandlers 110 ist an die erste Batterieeinheit 31 angeschlossen und stellt somit die an dieser ersten Batterieeinheit 31 anliegende Batteriespannung U1 ein. Durch eine geeignete Ansteuerung des DC/DC-Wandlers 110 bzw. ein geeignetes Einstellen der Batteriespannung U1 der ersten Batterieeinheit 31 lässt sich das Spannungsverhältnis bzw. die Abweichung zwischen den Batteriespannungen U1 und U2 minimieren bzw. auf Null regeln.

Alternativ kann die Ausgangsseite 112 des DC/DC-Wandlers 110 an die zweite Batterieeinheit 32 angeschlossen sein und somit die an dieser zweiten Batterieeinheit 32 anliegende Batteriespannung U2 einstellen; die obigen Erläuterungen gelten dann entsprechend.

Die Figur 3 zeigt ein weiteres Ausführungsbeispiel für eine Symmetriereinrichtung 100, die einen DC/DC-Wandler 110 umfasst. Die Eingangsseite 111 des DC/DC-Wandlers 110 ist an die erste Batterieeinheit 31 angeschlossen und wird mit der Batteriespannung U1 beaufschlagt. Die Ausgangsseite 112 des DC/DC-Wandlers 110 ist an die zweite Batterieeinheit 32 angeschlossen und wird mit der Batteriespannung U2 beaufschlagt, sodass der DC/DC-Wandler 110 die an den Batterieeinheiten 31 und 32 anliegenden Batteriespannungen U1 und U2 relativ zueinander einstellen kann. Durch eine geeignete Ansteuerung des DC/DC-Wandlers 110 bzw. ein geeignetes Einstellen der Batteriespannungen U1 und U2 der Batterieeinheiten 31 und 32 lässt sich das Spannungsverhältnis bzw. die Abweichung zwischen den Batteriespannungen U1 und U2 minimieren bzw. auf Null regeln.

Alternativ kann die erste Batterieeinheit 31 an die Ausgangsseite 112 des DC/DC-Wandlers 110 und die zweite Batterieeinheit 32 an die Eingangsseite 111 des DC/DC-Wandlers 110 angeschlossen sein; die obigen Erläuterungen gelten dann entsprechend.

Da bei der Ausführungsvariante gemäß Figur 3 der DC/DC-Wandler 110 zwischen die Batterieeinheiten 31 und 32 geschaltet ist, wird er maximal nur mit der Gleichspannung des Sekundärkreises 17 beaufschlagt und muss somit nur halb so spannungsfest ausgeführt werden wie im Falle des in der Figur 2 gezeigten Anschlusses des DC/DC-Wandlers 110 an den Gleichspannungszwischenkreis 14. Dies ermöglicht in vorteilhafter Weise den Einsatz eines besonders leichten und kostengünstigen DC/DC-Wandlers.

Die Figur 4 zeigt ein weiteres Ausführungsbeispiel für eine Symmetriereinrichtung 100, die bei dem Schienenfahrzeug 10 gemäß Figur 1 eingesetzt werden kann. Die Symmetriereinrichtung 100 gemäß Figur 4 weist einen invertierenden Wandler 120 auf, der auf seiner Eingangsseite 121 mit der Batteriespannung U1 der ersten Batterieeinheit 31 beaufschlagt ist. Mit seiner Ausgangsseite 122 steht der invertierende Wandler 120 mit der zweiten Batterieeinheit 32 in Verbindung und stellt somit die an dieser zweiten Batterieeinheit 32 anliegende Batteriespannung U2 ein. Durch geeignete Ansteuerung des invertierenden Wandlers 120 lässt sich somit eine Abweichung zwischen den Batteriespannungen U1 und U2 minimieren, im Idealfall auf Null stellen.

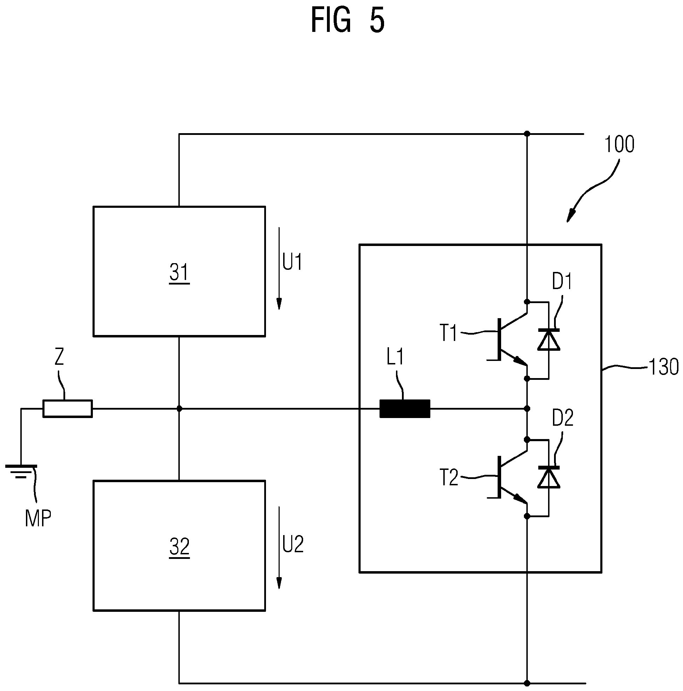

Die Figur 5 zeigt ein Ausführungsbeispiel für eine Symmetriereinrichtung 100, bei der ein Stromsteller 130 vorhanden ist. Der Stromsteller 130 umfasst zwei Schalttransistoren Tl und T2, zwei dazu parallel geschaltete Freilaufdioden Dl und D2 sowie eine Induktivität L1. Durch gepulstes Ansteuern des Schalttransistors Tl lässt sich ein Energiefluss von der ersten Batterieeinheit 31 zur zweiten Batterieeinheit 32 erzielen; durch ein gepulstes Betreiben des zweiten Schalttransistors T2 lässt sich ein Energiefluss in umgekehrter Richtung ermöglichen. Zusammengefasst ermöglicht der Stromsteller 130 gemäß Figur 5 einen bidirektionalen Energiefluss und somit einen Ausgleich der Batteriespannungen der beiden Batterieeinheiten 31 und 32, sodass eine Spannungsabweichung zwischen den Spannungen U1 und U2 minimiert werden kann.

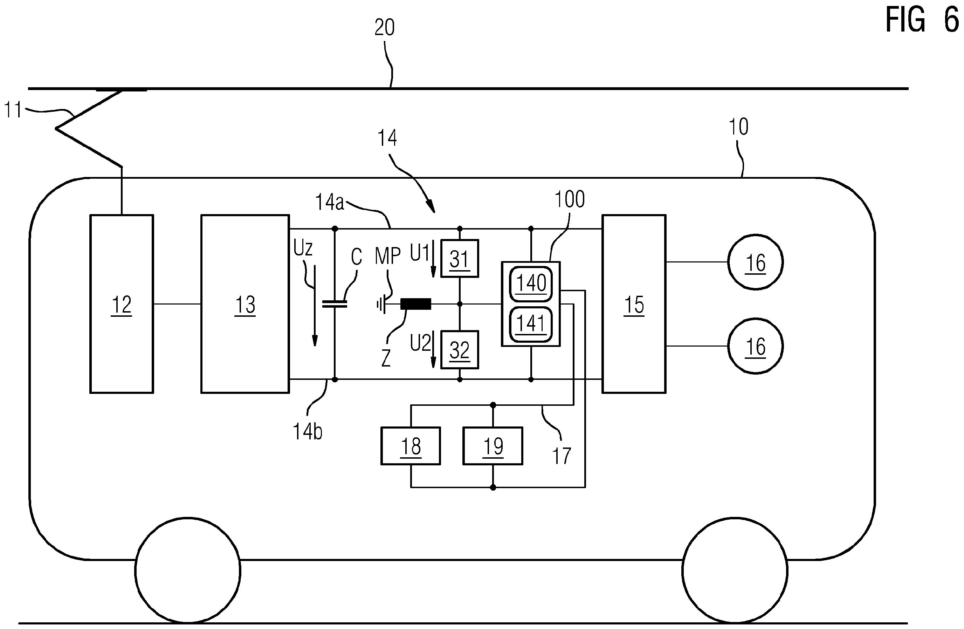

Die Figur 6 zeigt ein weiteres Ausführungsbeispiel für ein erfindungsgemäßes Schienenfahrzeug 10. Bei dem Ausführungsbeispiel gemäß Figur 6 umfasst die Symmetriereinrichtung 100 eine Schalteinrichtung 140, die den Sekundärkreis 17 elektrisch wahlweise parallel zur ersten Batterieeinheit 31 oder alternativ parallel zur zweiten Batterieeinheit 32 schaltet. Mit anderen Worten ist es möglich, den Sekundärkreis 17 mit der Batteriespannung U1 der ersten Batterieeinheit 31 oder der Batteriespannung U2 der zweiten Batterieeinheit 32 zu beaufschlagen. Die Symmetriereinrichtung 100 wird mittels ihrer Steuereinrichtung 141 die Schalteinrichtung 140 regelmäßig umschalten, wenn die Batteriespannungen der beiden Batterieeinheiten 31 und 32 zu stark voneinander abweichen.

Das Umschalten erfolgt dabei vorzugsweise derart, dass stets diejenige Batterieeinheit an den Sekundärkreis 17 angeschlossen wird, die einen höheren Ladezustand bzw. eine höhere Batteriespannung aufweist. Alternativ ist es möglich, die Batterieeinheit mit der niedrigeren Batteriespannung mit dem Sekundärkreis 17 zu verbinden, wenn beispielsweise mit der Energiequelle 19 ein Nachladen der betroffenen Batterieeinheit mit Energie der Energiequelle 19 erfolgen soll.

Bei den Ausführungsvarianten gemäß den Figuren 1 bis 6 können die Batterieeinheiten 31 und 32 jeweils in Reihe geschaltete Batteriezellen umfassen bzw. durch solche gebildet sein. Auch kann vorgesehen sein, dass die Batterieeinheiten 31 und 32 jeweils zwei oder mehr parallel geschaltete Reihenschaltungen aus in Reihe geschalteten Batteriezellen umfassen.

Von Vorteil ist es mit Blick auf eine einfache Symmetrierung, wenn die Batterieeinheiten baugleich sind oder zumindest dieselbe nominale Ladespannung aufweisen. Auch ist dieselbe nominale Ladekapazität von Vorteil.

Vorteilhaft ist es insbesondere, wenn die Batterieeinheiten 31 und 32 eine nominale Ladespannung zwischen 700 und 1000 V aufweisen und die Zwischenkreisspannung zwischen 1400 V und 2000 V liegt.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Bezugszeichenliste

- 10: Schienenfahrzeug
- 11: Stromabnehmer
- 12: Transformator
- 13: Gleichrichter
- 14: Gleichspannungszwischenkreis
- 14a: Anschluss
- 14b: Anschluss
- 15: Wechselrichter
- 16: Antriebsmotor
- 17: Sekundärkreis
- 18: elektrischer Verbraucher / Last
- 19: Energiequelle
- 20: Energieversorgungsnet
- 31: Batterieeinheit
- 32: Batterieeinheit
- 100: Symmetriereinrichtung
- 110: DC/DC-Wandler
- 111: Eingangsseite
- 112: Ausgangsseite
- 120: invertierender Wandler
- 121: Eingangsseite
- 122: Ausgangsseite
- 130: Stromsteller
- 140: Schalteinrichtung
- 141: Steuereinrichtung

- C: Kondensator
- D1: Freilaufdiode
- D2: Freilaufdiode
- L1: Induktivität
- M: Mittenanschluss
- MP: Massepotential
- T1: Schalttransistor
- T2: Schalttransistor
- U1: Batteriespannung
- U2: Batteriespannung
- Uz: Spannung
- Z: Impedanz

## Patentansprüche

1. Fahrzeug, insbesondere Schienenfahrzeug (10), mit einem Gleichspannungszwischenkreis (14) und zumindest einem mit dem Gleichspannungszwischenkreis (14) verbundenen Sekundärkreis (17), der ein niedrigeres Spannungsniveau als der Gleichspannungszwischenkreis (14) aufweist,
**dadurch gekennzeichnet, dass**
- an den Gleichspannungszwischenkreis (14) zwei in Reihe geschaltete Batterieeinheiten (31, 32) angeschlossen sind,
- der elektrisch zwischen den Batterieeinheiten (31, 32) liegende Mittenanschluss (M) unmittelbar oder mittelbar über eine Impedanz (Z) auf Massepotential (MP) liegt, und
- der Sekundärkreis (17) mit dem Mittenanschluss (M) in Verbindung steht und mit der Batteriespannung (Ul, U2) einer der beiden Batterieeinheiten (31, 32) beaufschlagt wird.

2. Fahrzeug nach Anspruch 1,
**dadurch gekennzeichnet, dass**
eine Symmetriereinrichtung (100) vorhanden ist, die eine etwaige Abweichung zwischen den Spannungen der zwei Batterieeinheiten (31, 32) unterhalb einer vorgegebenen Grenze hält.

3. Schienenfahrzeug (10) nach einem der voranstehenden Ansprüche,
**dadurch gekennzeichnet, dass**
die Symmetriereinrichtung (100) mit zumindest einem Anschluss mit der einen Batterieeinheit (31, 32) und mit zumindest einem Anschluss mit der anderen Batterieeinheit (31, 32) verbunden ist und zwischen den Batterieeinheiten (31, 32) einen Energiefluss unidirektional oder bidirektional ermöglicht.

4. Schienenfahrzeug (10) nach einem der voranstehenden Ansprüche,
**dadurch gekennzeichnet, dass**
die Symmetriereinrichtung (100) mit zumindest einem Anschluss mit dem Gleichspannungszwischenkreis (14) und mit zumindest einem Anschluss mit einer der Batterieeinheiten (31, 32) verbunden ist und einen Energiefluss zwischen dem Gleichspannungszwischenkreis (14) und der Batterieeinheit (31, 32) - uni- oder bidirektional - ermöglicht.

5. Schienenfahrzeug (10) nach einem der voranstehenden Ansprüche,
**dadurch gekennzeichnet, dass**
die Symmetriereinrichtung (100) einen bidirektionalen Stromsteller (130) umfasst, der einen Energiefluss wahlweise von der einen Batterieeinheit (31, 32) in die andere oder umgekehrt ermöglicht.

6. Schienenfahrzeug (10) nach einem der voranstehenden Ansprüche,
**dadurch gekennzeichnet, dass**
die Symmetriereinrichtung (100) einen DC/DC-Wandler (110), insbesondere DC/DC-Steller, umfasst, der mit zumindest einem Anschluss mit der einen Batterieeinheit (31, 32) und mit zumindest einem Anschluss mit der anderen Batterieeinheit (31, 32) verbunden ist und einen Energiefluss wahlweise von der einen Batterieeinheit (31, 32) in die andere oder umgekehrt ermöglicht.

7. Schienenfahrzeug (10) nach einem der voranstehenden Ansprüche,
**dadurch gekennzeichnet, dass**
die Symmetriereinrichtung (100) einen DC/DC-Wandler (110) umfasst, der mit einer Anschlussseite mit der Gleichspannung des Gleichspannungszwischenkreises (14) beaufschlagt und mit seiner anderen Anschlussseite mit einer der Batterieeinheiten (31, 32) verbunden ist.

8. Schienenfahrzeug (10) nach einem der voranstehenden Ansprüche,
**dadurch gekennzeichnet, dass**
die Symmetriereinrichtung (100) einen invertierenden Wandler (120) umfasst, der mit zumindest einem Anschluss mit der einen Batterieeinheit (31, 32) und mit zumindest einem Anschluss mit der anderen Batterieeinheit (31, 32) verbunden ist und einen Energiefluss von einer der Batterieeinheiten (31, 32) in die andere ermöglicht.

9. Schienenfahrzeug (10) nach einem der voranstehenden Ansprüche,
**dadurch gekennzeichnet, dass**
die Symmetriereinrichtung (100) eine Schalteinrichtung (140) umfasst, die den Sekundärkreis (17) wahlweise mit der einen Batterieeinheit (31, 32) oder der anderen Batterieeinheit (31, 32) verbindet oder zumindest verbinden kann.

10. Schienenfahrzeug (10) nach einem der voranstehenden Ansprüche,
**dadurch gekennzeichnet, dass**
die Symmetriereinrichtung (100) eine Energiequelle (19) umfasst oder mit einer Energiequelle (19) des Sekundärkreises (17) in Verbindung steht, die ein Aufladen zumindest einer der Batterieeinheiten (31, 32) ermöglicht.

11. Schienenfahrzeug (10) nach einem der voranstehenden Ansprüche,
**dadurch gekennzeichnet, dass**
die Symmetriereinrichtung (100) eine elektrische Last (18) und eine elektrische Energiequelle (19) umfasst oder mit einer elektrischen Last (18) des Sekundärkreises (17) und einer elektrischen Energiequelle (19) des Sekundärkreises (17) in Verbindung steht, die die Symmetriereinrichtung (100) mit zumindest einer der Batterieeinheiten (31, 32) verbinden kann, um diese aufzuladen oder zu entladen.

12. Schienenfahrzeug (10) nach einem der voranstehenden Ansprüche,
**dadurch gekennzeichnet, dass**
die Batterieeinheiten (31, 32) oder mindestens eine der Batterieeinheiten (31, 32) in Reihe geschaltete Batteriezellen umfasst.

13. Schienenfahrzeug (10) nach einem der voranstehenden Ansprüche,
**dadurch gekennzeichnet, dass**
die Batterieeinheiten (31, 32) oder mindestens eine der Batterieeinheiten (31, 32) zwei oder mehr parallel geschaltete Reihenschaltungen aus in Reihe geschalteten Batteriezellen umfasst.

14. Schienenfahrzeug (10) nach einem der voranstehenden Ansprüche,
**dadurch gekennzeichnet, dass**
die Batterieeinheiten (31, 32) baugleich sind oder zumindest die gleiche nominale Ladespannung und/oder Ladekapazität aufweisen.

15. Schienenfahrzeug (10) nach einem der voranstehenden Ansprüche,
**dadurch gekennzeichnet, dass**
- die Batterieeinheiten (31, 32) eine nominale Ladespannung zwischen 700 und 1000 V aufweisen und/oder
- die Zwischenkreisspannung zwischen 1400 V und 2000 V liegt.
